(19) Europäisches Patentamt / European Patent Office / Office européen des brevets

(11) **EP 2 495 907 A1**

(12) **EUROPEAN PATENT APPLICATION**

(43) Date of publication:
**05.09.2012 Bulletin 2012/36**

(51) Int Cl.:
***H04L 9/30*** $^{(2006.01)}$

(21) Application number: **11156333.4**

(22) Date of filing: **28.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Certicom Corp.**
**Mississauga, Ontario L4W 0B5 (CA)**

(72) Inventor: **Struik, Marinus**
**Mississauga Ontario L4W 5L1 (CA)**

(74) Representative: **Moore, Barry et al**
**Hanna Moore & Curley**
**13 Lower Lad Lane**
**Dublin 2 (IE)**

(54) **System and method for reducing computations in the derivation of a publick key corresponding to an implicit certificate**

(57) There are disclosed systems and methods for reducing the number of computations performed by a computing device constructing a public key from an implicit certificate associated with a certificate authority in an implicit certificate scheme. In one embodiment, the device first operates on the implicit certificate to derive an integer $e$. The device then derives a pair of integers ( $e_1$ , $e_2$ ) from the integer $e$, such that each of the pair of integers ( $e_1$ , $e_2$ ) has a bit length less than the bit length of the integer $e$, and such that the ratio of the pair of integers ( $e_1$ , $e_2$ ) corresponds to the integer $e$. The device then computes the public key by combining the integers $e_1$ and $e_2$ with public key contribution data derived from the implicit certificate and a static public key of the certificate authority.

| | |
|---|---|
| Correspondent 12 operates on $IC_A$ to obtain $I_A$ and $B_A$ | 302 |
| Correspondent 12 verifies contents of $IC_A$ | 304 |
| Correspondent 12 computes $e=Hash(IC_A)$ | 306 |
| Correspondent 12 obtains $e_1$ and $e_2$ from $e$ | 308 |
| Correspondent 12 computes its private key $w_A=e_1 d_A + e_2 s \pmod n$ | 310 |

**FIG. 5**

**(Cont. next page)**

EP 2 495 907 A1

Correspondent 14 operates
on $IC_A$ to obtain $I_A$ and $B_A$ — 402

Correspondent 14 verifies
contents of $IC_A$ — 404

Correspondent 14 computes
$e = Hash(IC_A)$ — 406

Correspondent 14 obtains
$e_1$ and $e_2$ from $e$ — 408

Correspondent 14 computes
public key of correspondent 12
$W_A = e_1 B_A + e_2 W_{CA}$ — 410

# FIG. 6

**Description**

The following relates generally to the generation of implicit certificates in cryptographic systems.

A cryptographic system is a computer system that uses cryptography, typically to secure or authenticate data communication between a pair of computing devices connected to one another through a data communication link in the system. Each computing device has a cryptographic unit with the processing capacity to implement one or more cryptographic protocols used to secure or authenticate the data communication. The cryptographic protocols typically perform arithmetic operations on the bit strings representing parameters, messages, or data in the protocols to produce a bit string representing the output from the protocol.

In cryptographic systems, Certification Authorities (CAs) are trusted 3rd parties responsible for vouching for the authenticity of public keys. For example, if correspondent A wishes to distribute its public key $W_A$, correspondent A may request that a CA issue a certificate for public key $W_A$.

Depending upon the application, the CA may issue an implicit certificate for public key $W_A$. Implicit certificates are known in the art. Unlike conventional "explicit" certificates, implicit certificates require no explicit verification of the CA's signature. Therefore, implicit certificates are generally smaller in size and can offer bandwidth savings over conventional explicit certificates. A public key distributed via such an implicit certificate is implicitly authenticated by successfully using the public key in an operation that requires the use of the corresponding private key.

A well-known implicit certificate scheme is Elliptic Curve Qu-Vanstone (ECQV). This scheme provides implicit authentication when the implicit certificate is used in conjunction with an operation requiring the sender to use the corresponding private key, such as in ECDH, ECMQV, or ECDSA operations. A summary of ECQV is as follows.

A correspondent, A, wishing to establish a private/public key pair ( $w_A$, $W_A$ ) and distribute public key $W_A$ via an implicit certificate, first uses its random number generator to generate a random integer to be used as an ephemeral private key $d_A$. The cryptographic unit then generates a corresponding ephemeral public key $Q_A = d_A G$, where G is the base point on the underlying elliptic curve and a generator of the subgroup of the elliptic curve group. Correspondent A then sends $Q_A$, as well as any identity information, to the CA. The CA receives $Q_A$ and the identity information and performs the following steps:

> 1. Verify the received ephemeral public key $Q_A$ and identity information. Verification can be done a number of ways. For example, the CA may verify that $Q_A$ is a proper public key that satisfies specific criteria, such as being a point on the underlying elliptic curve, and/or satisfies defined statistical criteria. In another example, the CA verifies whether the identity information is correct. If verification fails, abort operation. If verification succeeds, proceed.

> 2. Generate an ephemeral private and public key pair ( $d_{CA}$, $Q_{CA}$ ), where $Q_{CA} = d_{CA}G$. .
> 3. Compute public key contribution data $B_A = Q_A + Q_{CA}$ .
> 4. Construct certificate data $I_A$.
> 5. Construct an implicit certificate $IC_A$ containing $B_A$ and $I_A$ .
> 6. Compute $e = Hash(IC_A)$.
> 7. Compute private key contribution data $s = ed_{CA} + w_{CA}$ (mod $n$) , where n is the order of base point G, and $w_{CA}$ is the static private key of the CA.
> 8. Send $IC_A$ and $s$ to correspondent A.

Upon receiving $IC_A$ and s, correspondent A performs the following steps to calculate its key pair ( $w_A$, $W_A$ ) :

> 1. Operate on $IC_A$ to obtain $B_A$ and $I_A$ .
> 2. Verify the contents of $IC_A$ according to the application rules. For example, this may include verifying the information is properly formatted, verifying content of $I_A$ matches information sent by correspondent A to the CA, and/or verifying $B_A$ is a valid point on the underlying curve.
> 3. Compute $e = Hash(IC_A)$ and verify $e \neq 0$ .
> 4. Compute its private key $w_A = ed_A + s$ (mod $n$) .
> 5. Compute its public key $W_A = eB_A + W_{CA}$, where $W_{CA}$ is the static public key of the CA corresponding to the static private key $w_{CA}$ .

The CA distributes the implicit certificate $IC_A$ to the other correspondents. A particular correspondent, say correspondent B, receives $IC_A$ and derives the public key $W_A$ of correspondent A as follows:

> 1. Operate on $IC_A$ to compute $B_A$ and $I_A$;
> 2. Verify the contents of $IC_A$ according to the application rules;
> 3. Compute $e = Hash(IC_A)$ and verify $e \# 0$ ; and
> 4. Compute public key $W_A = eB_A + W_{CA}$.

Correspondent B is therefore able to use the static public key $W_{CA}$ of the CA to derive $W_A$ from the implicit certificate $IC_A$ . However, correspondent B has no way of knowing whether correspondent A possesses the corresponding private key $w_A$. This is also the case with ordinary explicit certificates (e.g. ECDSA and RSA certificates), unless the CA first wants proof of possession before issuing a certificate. Therefore, authentication of correspondent A and its public key $W_A$ is not complete until an operation involving both $W_A$ and $w_A$ is successfully performed. For example, correspondent A and correspondent B may subsequently engage in an ECMQV key agreement or ECDSA signature protocol, both of which require the use of $W_A$ and $w_A$ . If the key agreement or signature operations fail, then $W_A$ might not have been authentic or valid. On the other hand, if the key agreement or signature operations are successful, then correspondent A must possess $w_A$, and the authenticity and validity of $W_A$ is implicitly verified.

The ECQV implicit certificate scheme above is an example of an implicit certificate scheme. It is generally desired to reduce the number of computations performed in an implicit certificate scheme.

GENERAL

A method may be provided for computing a public key from an implicit certificate associated with a certificate authority in a cryptographic communication system based on an underlying group of order n ; the method being performed by a computing device in the communication system; the device having a cryptographic unit. The method comprises: the device operating on the implicit certificate in the cryptographic unit to derive an integer $e$; the device deriving a pair of integers $e_1$ and $e_2$ from the integer $e$ in said cryptographic unit, each of the integers $e_1$ and $e_2$ having a bit length less than the bit length of the integer $e$, and the ratio of the pair of integers $e_1$ and $e_2$ corresponding to the integer $e$; and the device computing the public key by combining the integers $e_1$ and $e_2$ with public key contribution data derived from said implicit certificate and a static public key of the certificate authority.

In another aspect, a method may be provided for computing a private key from an implicit certificate associated with a certificate authority in a cryptographic communication system based on an underlying group of order n ; the method being performed by a computing device in the communication system; the device having a cryptographic unit. The method comprises: the device generating an ephemeral private key; the device operating on the implicit certificate in the cryptographic unit to derive an integer $e$ ; the device deriving a pair of integers $e_1$ and $e_2$ from the integer $e$ in the cryptographic unit, each of the integers $e_1$ and $e_2$ having a bit length less than the bit length of the integer $e$, and the ratio of the integers $e_1$ and $e_2$ corresponding to the integer e ; and the device computing the private key by combining the integers $e_1$ and $e_2$ with the ephemeral private key and private key contribution data of the certificate authority.

In general terms, the following may provide methods for reducing the number of computations performed by a computing device constructing a public key from an implicit certificate. A self-signed implicit certificate scheme is also described, and the methods for reducing the number of computations are also applied to the self-signed implicit certificate scheme.

A system configured to perform the methods may also be provided, as well as a computer-readable medium having stored thereon computer readable instructions for performing the methods.

BRIEF DESCRIPTION

Representative embodiments will now be described by way of example only with reference to the accompanying drawings, in which:

Figure 1 is a schematic of a cryptographic communication system;

Figure 2 is a schematic of one specific example of the communication system of Figure 1;

Figure 3 is a schematic representation of a cryptographic unit of a computing device shown in Figure 1;

Figure 4 is a schematic of an embodiment of a method of generating both an implicit certificate and private key reconstruction data;

Figure 5 is a schematic of an embodiment of a method of generating a private key using the implicit certificate and the private key reconstruction data;

Figure 6 is a schematic of an embodiment of a method of generating a public key by operating upon the implicit certificate;

Figure 7 is a schematic of an embodiment of a method of generating a self-signed implicit certificate;

Figure 8 is a schematic of an embodiment of a method of generating a public key by operating upon the self-signed implicit certificate;

Figure 9 is a schematic of an embodiment of a method of computing a public key from an implicit certificate; and

Figure 10 is a schematic of an embodiment of a method of computing a private key.

DETAILED DESCRIPTION

Embodiments will now be described with reference to the figures. It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

It will also be appreciated that any module, component, or device exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data, except transitory propagating signals per se. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the device or accessible or connectable thereto. Any application or module herein described may be implemented using computer readable/ executable instructions that may be stored or otherwise held by such computer readable media.

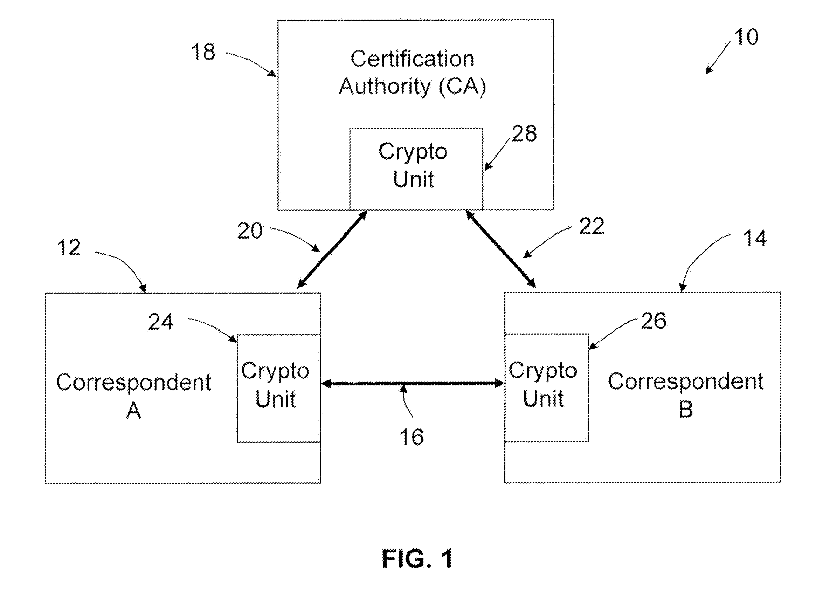

Turning therefore to Figure 1, a data communication system is generally denoted by numeral 10. The system 10 includes a first correspondent 12 and a second correspondent 14, which are typically a pair of computing devices, such as a client/server, a pair of computers, or a pair of mobile devices, who communicate with each other over a communication channel 16. The system also includes a CA 18, which communicates with the first correspondent 12 and the second correspondent 14 over communication channels 20 and 22 respectively. The CA 18 is a trusted party, typically also a computing device, that issues implicit certificates for the public keys of correspondent 12 or correspondent 14, or both.

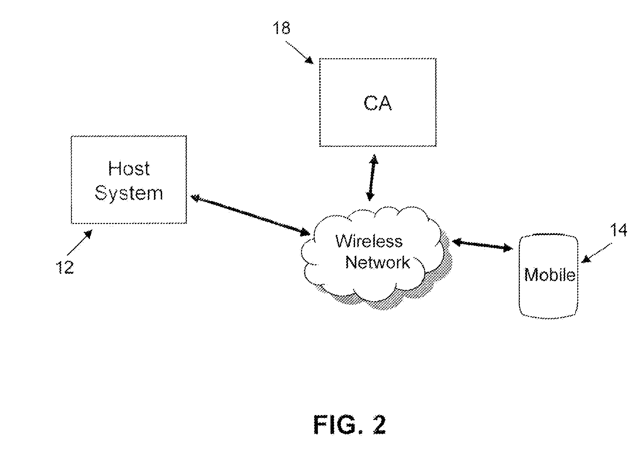

Figure 2 shows one specific implementation of the data communication system 10 of Figure 1 in which the correspondent 14 is a mobile device, the correspondent 12 is a corporate enterprise computer system (host system), and the communication channel 16 is part of a wireless network. In the embodiment shown in Figure 2, the host system 12 provides a host service that offers push-based messages for the mobile device 14. When data arrives at the host system 12, the host service is capable of notifying and presenting the data to the user in real-time at the mobile device 14. A wireless router (not shown) provides the wireless connectivity functionality as it acts to both abstract most of the wireless network's complexities, and it also implements features necessary to support pushing data to the mobile device 14. The host system 12 and mobile device 14 exchange public keys using certificates issued by the CA 18.

The embodiment shown in Figure 2 is one specific implementation. More generally, and returning to Figure 1, correspondent 12, correspondent 14, and CA 18 are computing devices that each have a cryptographic unit 24, 26, and 28 respectively to implement cryptographic protocols and associated arithmetic operations. In the illustrated embodiments, the cryptographic protocols are implemented in a public key cryptographic system based on the intractability of the discrete logarithm problem in an elliptic curve group defined over a finite field, commonly referred to as an elliptic curve cryptosystem or ECC. As such, a private key k is used to generate a corresponding public key $Q$ by performing a k-fold group operation on a generator G of order n. The elliptic curve group is usually defined with an additive operation so that $Q = kG$.

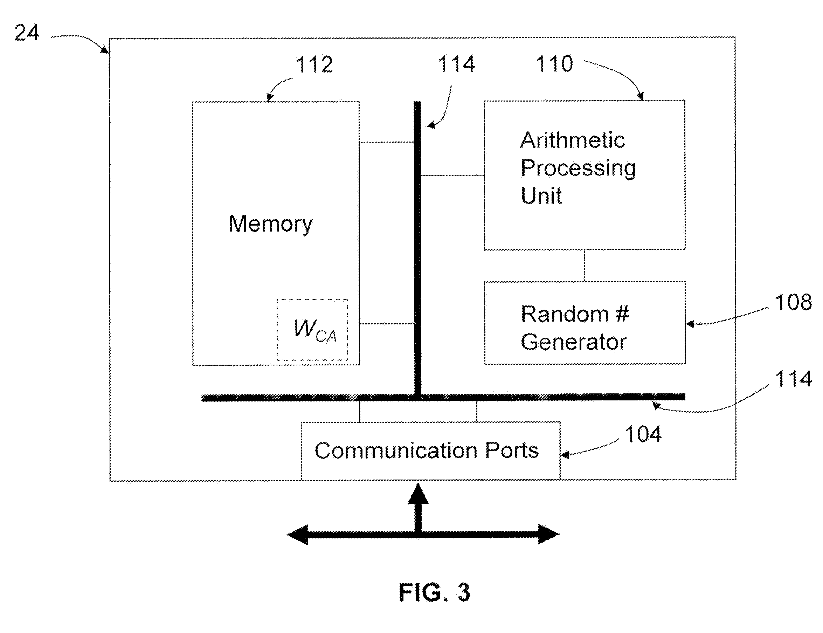

The cryptographic unit 24 of the correspondent 12 is shown in greater detail in Figure 3, it being understood that cryptographic units 26 and 28 will have similar functionality.

Cryptographic unit 24 comprises one or more communication ports 104 for communicating with correspondent 14 and CA 18, as well as an arithmetic processing unit 110 for performing elliptic curve cryptographic operations. The arithmetic processing unit 110 can comprise hardware, computer readable software instructions, or a combination of both that is configured to perform cryptographic operations such as those described in detail below. A random number generator 108 is accessible by the arithmetic processing unit 110. The cryptographic unit 24 further comprises memory 112 for storing the results of cryptographic operations and for storing information received via port 104. The static public key $W_{CA}$ of the CA 18 is stored in the memory 112 of correspondent 12. It will be appreciated that the static public key $W_{CA}$ of the CA 18 is also stored in the memory of the correspondent 14, and that the corresponding static private key $w_{CA}$ of the CA 18 is stored in a secure partition of the memory of the CA 18. Internal buses 114 are provided within cryptographic unit 24 for communicating information internally.

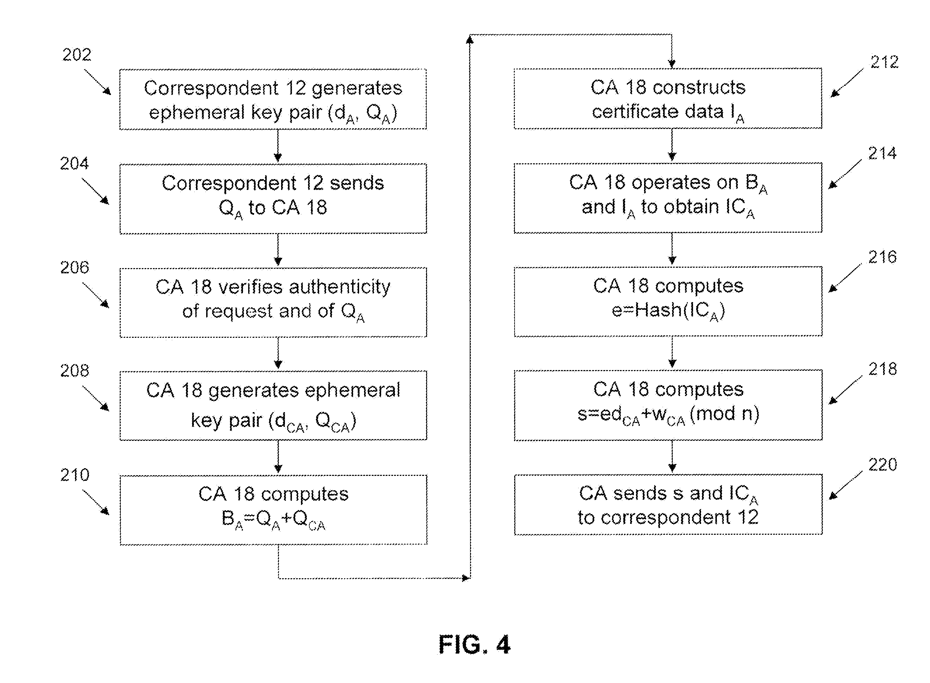

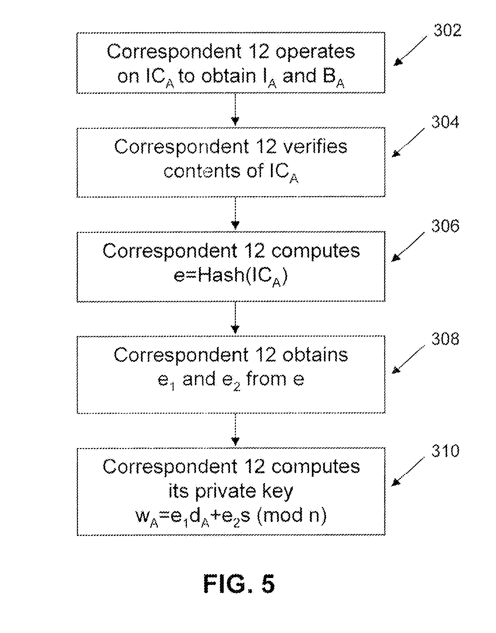

During operation, correspondent 12 wishes to establish a key pair $(w_A, W_A)$ and distribute its public key $W_A$ to correspondent 14 using an implicit certificate. The correspondents 12 and 14, as well as the CA 18 therefore participate in an ECQV implicit certificate scheme that is modified as described below to reduce the number of computations required to construct the public key $W_A$ from the implicit certificate. The steps performed by correspondent 12 and the CA 18 are described with reference to Figures 4 and 5. Figures 4 and 5 can comprise a set of computer readable instructions executed by the correspondent 12 and the CA 18.

Turning first to Figure 4, in step 202, the cryptographic unit 24 of correspondent 12 first generates an ephemeral private/public key pair $(d_A, Q_A)$. $d_A$ is an integer, typically generated using the random number generator 108 within cryptographic unit 24, and $Q_A$ is calculated by unit 24 as $Q_A = d_A G$. The ephemeral value $d_A$ is temporarily stored, for example, in memory 112, for later use in constructing private key $w_A$.

In step 204, the correspondent 12 then transmits to the CA 18 over channel 20 its ephemeral public key $Q_A$, as well as a certificate request, which typically includes information such as the identity of the correspondent 12.

Next, in step 206, the CA 18 verifies the authenticity of the request received from the correspondent 12, for example, by checking that correspondent 12 is indeed the origin of the request and that correspondent 12 is authorized to obtain a certificate. The CA 18 also verifies that $Q_A$ is a valid key for the underlying parameters.

Then, in step 208, the cryptographic unit 28 of the CA 18 generates an ephemeral private/public key pair ($d_{CA}$, $Q_{CA}$).

Next, in step 210, the cryptographic unit 28 of the CA computes public key contribution data $B_A = Q_A + Qc_A$ .

In step 212, the CA 18 then constructs certificate data $I_A$. The certificate data $I_A$ includes information specific to the certificate. For example, the certificate information can include information such as: identification information, the validity period of the certificate, and/or the intended use of the public key.

Next, in step 214, the CA 18 operates on $B_A$ and $I_A$ to construct an implicit certificate $IC_A$. This may be as simple as concatenating data values $B_A$ and $I_A$, e.g., $IC_A = B_A \| I_A$ . It will be appreciated that a compressed or encoded version of $B_A$ can be used in place of $B_A$, as long as $B_A$ can be derived by a recipient of the implicit certificate from the compressed or encoded version of $B_A$. For example, the certificate may include an encoded or compressed octet string derived from $B_A$, for example, perhaps the x-coordinate of $B_A$ along with a single bit representing the y-coordinate of $B_A$.

In step 216, the cryptographic unit 28 of the CA 18 then calculates intermediate integer value $e = Hash(IC_A)$, where $Hash( )$ is a hash function. In an exemplary embodiment, $Hash(IC_A)$ is truncated, if necessary, in order to yield a value e having a maximum bit length of $\lfloor \log_2 n \rfloor$ bits.

Next, in step 218, cryptographic unit 28 uses integers $d_{CA}$ and e to compute private key reconstruction data s according to the formula $s = ed_{CA} + w_{CA} \pmod{n}$ .

Finally, in step 220, the CA 18 sends to correspondent 12 over communication channel 20 the private key reconstruction data s (or an octet string representing s), as well as the implicit certificate $IC_A$.

Turning next to Figure 5, the steps performed by the correspondent 12 to compute its private key $w_A$ using s and $IC_A$ are described below.

First, in step 302, correspondent 12 operates on $IC_A$ to obtain values $B_A$ and $I_A$ . For example, if the implicit certificate is of the form $IC_A = B_A \| I_A$, correspondent 12 simply parses out the values $B_A$ and $I_A$. If the implicit certificate includes a compressed or encoded version of $B_A$, correspondent 12 operates on this compressed or encoded version of $B_A$ to obtain $B_A$.

In step 304, correspondent 12 then verifies the contents of $IC_A$ according to application rules. This can include verifying the contents of the certificate data $I_A$, and/or the certificate's validity period. In some embodiments, correspondent 12 also verifies $B_A$ is a valid key, for example, by verifying that $B_A$ is a point on the underlying curve. Correspondent 12 may also verify the origin of the certificate $IC_A$ and the private key reconstruction data s . The operation aborts if verification fails. If verification succeeds, then the operation continues.

Next, in step 306, the cryptographic unit 24 of the correspondent 12 calculates intermediate integer value $e = Hash(IC_A)$. In an exemplary embodiment, $Hash(IC_A)$ is truncated, if necessary, in order to yield a value e having a maximum bit length of $\lfloor \log_2 n \rfloor$ bits. The correspondent 12 verifies that $e \neq 0$ .

Then, in step 308, the cryptographic unit 24 operates on integer e to obtain a pair of integers $e_1$ and $e_2$, each of the integers $e_1$ and $e_2$ having a bit length less than the bit length of e , and the ratio of $e_1$ and $e_2$ corresponding to e : $e = e_1/e_2 \pmod{n}$ . In general, e will have a bit length of $\lfloor \log_2 n \rfloor$ bits, and therefore $e_1$ and $e_2$ will each have bit lengths less than $\lfloor \log_2 n \rfloor$. As will be explained below, by utilizing $e_1$ and $e_2$ in the computation of the private and public key pair ( $w_A$, $W_A$ ), computational savings can be achieved in the construction of the public key $W_A$ .

In an exemplary embodiment, $e_1$ and $e_2$ are calculated using an iterative algorithm that is interrupted when integers of desired bit length are obtained, for example, the truncated version of the Extended Euclidean Algorithm. The Extended Euclidean Algorithm is known in the art, and is described, for example, in Algorithm 2.19 in Guide to Elliptic Curve Cryptography, Hankerson et al., Springer-Verlag, 2004, incorporated herein by reference. The Extended Euclidean Algorithm is repeated below using the notation of Algorithm 2.19:

INPUT: Positive integers $a$ and $b$ with $a \leq b$.

    1. $u \leftarrow a; v \leftarrow b; x_1 \leftarrow ; 1; y_1 \leftarrow 0; x_2 \leftarrow 0; y_2 \leftarrow 1;$
    2. While $u \neq 0$ do:

        2.1 $q \leftarrow \lfloor v/u \rfloor$; $r \leftarrow v - qu; x \leftarrow x_2 - qx_1; y \leftarrow y2 - qy_1;$
        2.2 $v \leftarrow u; u \leftarrow r; x_2 \leftarrow x_1; x_1 \leftarrow x; y_2 \leftarrow y_1; y_1 \leftarrow y;$

    3. $d \leftarrow v; x \leftarrow x_2; y \leftarrow y_2;$
    4. Return $(d, x, y)$ .

To perform the truncated Extended Euclidean Algorithm, the cryptographic unit 24 executes the Extended Euclidean Algorithm above with inputs $a = e$ and $b = n$, but "truncates" or stops the Extended Euclidean Algorithm as soon as $x_1$ is an integer that is more than t bits long, where $t = \lambda \lfloor \log_2 n \rfloor$. $\lambda$ $\lambda$ is an efficiency parameter selected by the cryptographic unit 24. $\lambda$ is selected to be between 0 and 1. It is preferred that $\lambda = 0.5$ to achieve maximum computational savings in the construction of public key $W_A$, however, it will be appreciated that in general $0 < \lambda < 1$. When $\lambda = 0$, there are no computational savings over performing ECQV.

In general, any method, technique, or algorithm can be executed by the cryptographic unit 24 that produces $e_1$ and $e_2$ from $e$ such that $e_1$ and $e_2$ have a bit length less than the bit length of $e$, and such that the ratio of $e_1$ and $e_2$ corresponds to $e$.

Once $e_1$ and $e_2$ are computed, in step 310, the cryptographic unit 24 of correspondent 12 retrieves ephemeral private key $d_A$ from memory 112 and computes its private key $w_A$ by combining the integer $e_1$ with the ephemeral private key $d_A$ and combining the integer $e_2$ with the private key contribution data s. The computation of the private key $w_A$ is of the form $w_A = e_1 d_A + e_2 s$ (modn).

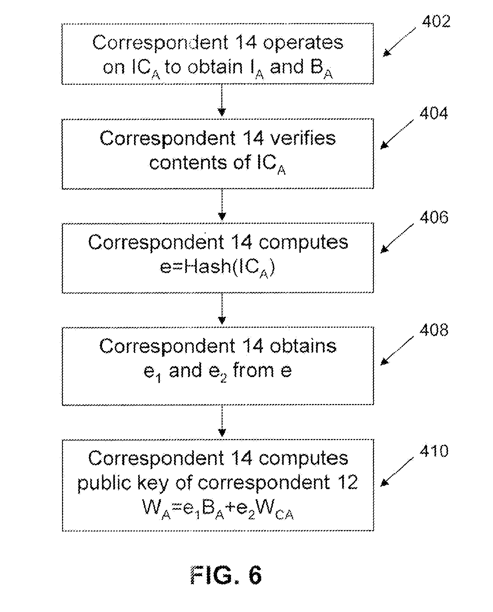

Correspondent 12 has now generated its private key $w_A$ using implicit certificate $IC_A$ and private key reconstruction data s transmitted from the CA 18. As will be shown in Figure 6, the public key $W_A$ corresponding to private key $w_A$ is computable by any party having the implicit certificate $IC_A$.

Let us assume that correspondent 14 wishes to obtain the public key $W_A$ of correspondent 14. Therefore, correspondent 14 requests implicit certificate $IC_A$ from the CA 18 over communication channel 22. Upon receiving implicit certificate $IC_A$, correspondent 14 performs the following steps described below with reference to Figure 6 to obtain the public key $W_A$ of correspondent 12. Figure 6 can comprise a set of computer readable instructions executed by the correspondent 14.

First, in step 402, correspondent 14 operates on $IC_A$ to obtain values $B_A$ and $I_A$. For example, if the implicit certificate is of the form $IC_A = B_A \| I_A$, correspondent 14 simply parses out the values $B_A$ and $I_A$. If the implicit certificate includes a compressed or encoded version of $B_A$, correspondent 14 operates on this compressed or encoded version of $B_A$ to obtain $B_A$.

In step 404, correspondent 14 then verifies the contents of $IC_A$ according to application rules. This can include verifying the contents of the certificate data $I_A$, and/or the certificate's validity period. In some embodiments, correspondent 14 also verifies $B_A$ is a valid key, for example, by verifying that $B_A$ is a point on the underlying curve.

Next, in step 406, the cryptographic unit 26 of the correspondent 14 calculates intermediate integer value $e = Hash(IC_A)$. In an exemplary embodiment, $Hash(IC_A)$ is truncated, if necessary, in order to yield a value

$e$ having a maximum bit length of $\lfloor \log_2 n \rfloor$ bits. The

correspondent 14 verifies that $e \neq 0$.

Then, in step 408, the cryptographic unit 26 operates on integer $e$ to derive the pair of integers $e_1$ and $e_2$, as in step 308 of Figure 5.

Finally, in step 410, the cryptographic unit 26 of correspondent 14 retrieves the static public key $W_{CA}$ of the CA 18 and computes the public key $W_A$ of correspondent 12 by combining the integer $e_1$ with the public key contribution data $B_A$ and combining the integer $e_2$ with the public key $W_{CA}$ of the CA. The combination is of the form $W_A = e_1 B_A + e_2 W_{CA}$.

Thus, by performing steps 402 to 410, correspondent 14 obtains the public key $W_A$ of correspondent 12 by operating on the implicit certificate $IC_A$.

Upon the completion of step 410, correspondent 14 may then use $W_A$ to perform a operation with correspondent 12 involving both $W_A$ and $w_A$ to implicitly authenticate $W_A$. For example, correspondent 12 and correspondent 14 may subsequently engage in an ECMQV key agreement or ECDSA signature protocol, both of which require the use of $W_A$ and $w_A$. If the key agreement or signature operations fail, then $W_A$ might not have been authentic or valid. On the other hand, if the key agreement or signature operations are successful, then correspondent 12 must possess $w_A$, and the authenticity and validity of $W_A$ is implicitly verified.

In the embodiments described above, the private key $w_A$ of correspondent 12 and the corresponding public key $W_A$ of correspondent 12 are computed using integers $e_1$ and $e_2$ as $w_A = e_1 d_A + e_2 s$ (mod $n$) and $W_A = e_1 B_A + e_2 W_{CA}$ respectively. As discussed above, integers $e_1$ and $e_2$ are derived such that each of the integers $e_1$ and $e_2$ has a bit length less than the bit length of $e$, and such that the ratio of $e_1$ and $e_2$ corresponds to $e$, i.e., $e = e_1/e_2$ (modn).

In conventional ECQV, the key pair ($w_A$, $W_A$) is calculated as $w_A = ed_A + s$ (mod $n$) and $W_A = eB_A + W_{CA}$. However, by instead obtaining $e_1$ and $e_2$ from $e$ and calculating the key pair ($w_A$, $W_A$) using $e_1$ and $e_2$ as above, computational savings can be achieved. This is because $e_1$ and $e_2$ each have a bit length less than $e$, which can be exploited to substantially reduce the number of computations required to calculate public key $W_A$. Even though the calculation of $W_A = e_1 B_A + e_2 W_{CA}$ requires two point multiplications ($e_1 B_A$ and $e_2 W_{CA}$) compared to one ($eB_A$), the fact that $e_1$ and $e_2$ each have a bit length less than $e$, combined with other techniques known in the art, can result in substantial computational savings overall. For example, in one embodiment, $W_A = e_1 B_A + e_2 W_{CA}$ is computed by the cryptographic unit 26 of correspondent 14 using simultaneous multiple point multiplication, which saves on doubling operations. Algorithms for performing multiple point multiplication are known in the art. An example of one such algorithm is simultaneous multiple point multiplication, which is described, for example, in Algorithm 3.48 in Guide to Elliptic Curve Cryptography, Hankerson et al., Springer-Verlag, 2004, incorporated herein by reference. The simultaneous multiple point multiplication algorithm is repeated below for completeness mirroring the notation used in Algorithm 3.48:

INPUT: Window width $w$, $e_1 = (k_{t-1}, ..., k_0)_2$, $e_2 = (l_{t-1}, ..., l_0)_2$, $B_A$, $W_{CA}$.

OUTPUT: $e_1B_A + e_2 W_{CA}$

1. Compute $iB_A + jW_{CA}$ for all $i, j \in [0, 2^w - 1]$.
2. Write $e_1 = (K^{d-1}, ..., K^1, K^0)$ and $e_2 = (L^{d-1}, ..., L^1, L^0)$ where each $K^i, L^i$ is abit string of length $w$,

and $d = \lceil t / w \rceil$.

3. $R \leftarrow \infty$.
4. For $i$ from $d-1$ down to 0 do:

4.1 $R \leftarrow 2^w R$;
4.2 $R \leftarrow R + (K^i B_A + L^i W_{CA})$;

5. Return R .

In another embodiment, correspondent 14 has stored in its memory pre-computed multiples of the static public key $W_{CA}$. Therefore, in calculating the public key $W_A$ of correspondent 12, correspondent 14 needs only to compute $e_1B_A$, since $e_2 W_{CA}$ can be retrieved from the table of pre-computed multiples in memory using $e_2$. Since $e_1$ has a bit length less than $e$, the number of computations required to compute $e_1B_A$ is less than the number of computations required to compute $eB_A$.

As from the above, to calculate the public key $W_A$ using $e_1$ and $e_2$ to achieve computational savings, one option is to calculate the corresponding private key $w_A$ using $e_1$ and $e_2$. Although there may not be computational savings in computing the private key as $w_A = e_1 d_A + e_2 s \pmod{n}$ compared to the computation $w_A = e d_A + s \pmod{n}$ in conventional ECQV, it will be appreciated that the computational savings in computing $W_A$ as $W_A = e_1B_A + e_2 W_{CA}$ outweigh any additional computations necessary to compute $w_A = e_1 d_A + e_2 s \pmod{n}$. This is because the total number of integer multiplications and additions required to calculate private key $w_A$ is substantially less than the total number of computations required to compute the public key $W_A$. Savings in computing the public key $W_A$ outweigh any additional computations necessary to compute private key $w_A$ and/or to derive integers $e_1$ and $e_2$ from $e$. Moreover, only one correspondent (correspondent 12) computes the private key $w_A$, whereas potentially many correspondents will compute the corresponding public key $W_A$ from the implicit certificate $IC_A$. Therefore, the above-described technique provides computational savings overall.

The above technique can also be applied to a scheme for generating self-signed implicit certificates. Self-signed certificates can be used in a data communication system to begin a chain of trust. Typically, a root CA issues a self-signed certificate as an output of a trusted event, and the self-signed certificate can subsequently be operated upon by any correspondent in the data communication system to obtain the public key of the root CA.

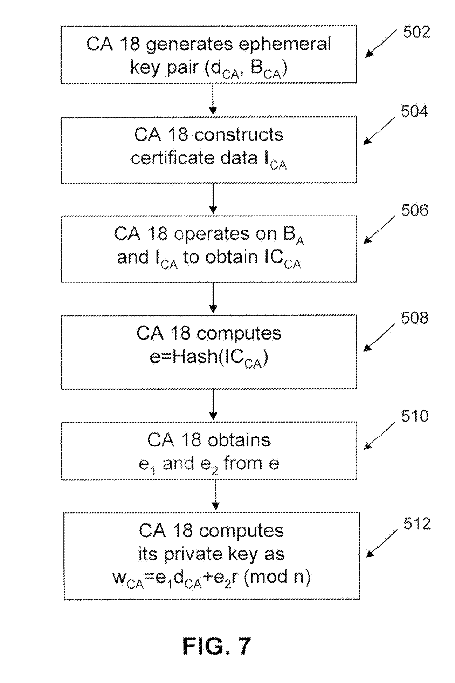

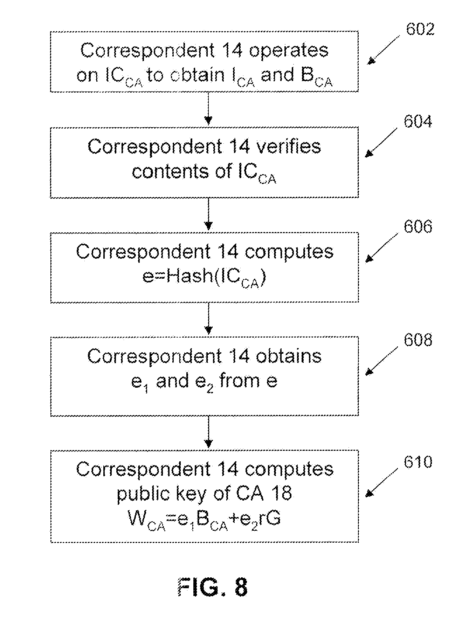

The generation of a self-signed implicit certificate by the CA 18, as well as the process by which the self-signed implicit certificate is operated on to derive $W_{CA}$, is explained in full detail below with reference to Figures 7 and 8. Figures 7 and 8 can comprise a set of computer readable instructions executed by the CA 18 and by a correspondent.

Turning first to Figure 7, the generation of a self-signed implicit certificate $IC_{CA}$ by the CA 18 is described. First, in step 502, the cryptographic unit 28 of the CA 18 first generates an ephemeral private/public key pair ($d_{CA}$, $B_{CA}$). $d_{CA}$ is an integer, typically generated using a random number generating module within cryptographic unit 28, and $B_{CA}$ is calculated by cryptographic unit 28 as $B_{CA} = d_{CA}G$.

In step 504, the CA 18 next creates certificate data $I_{CA}$ for its self-signed certificate. The certificate data $I_{CA}$ includes information specific to the certificate. For example, the certificate information can include information such as: identification information, the validity period of the certificate, and/or the intended use of the public key.

Next, in step 506, the CA 18 operates upon $B_{CA}$ and $I_{CA}$ to generate a self signed implicit certificate $IC_{CA}$. This can be as simple as concatenating values $B_{CA}$ and $I_{CA}$, e.g., $IC_{CA} = B_{CA} \| I_{CA}$. It will be appreciated that a compressed or encoded version of $B_{CA}$ can be used in place of $B_{CA}$, as long as $B_{CA}$ can be derived by a recipient of the self-signed implicit certificate from the compressed or encoded version of $B_{CA}$. For example, the certificate may include a compressed or encoded octet string derived from $B_{CA}$, for example, perhaps the x-coordinate of $B_{CA}$ along with a single bit representing the y-coordinate of $B_{CA}$.

In step 508, the cryptographic unit 28 of the CA 18 then calculates intermediate integer value $e = Hash(IC_{CA})$, where $Hash(\ )$ is a hash function. In an exemplary embodiment, $Hash(IC_{CA})$ is truncated, if necessary, in order to yield a value $e$ having a maximum bit length of

$\lfloor \log_2 n \rfloor$ bits.

Then, in step 510, the cryptographic unit 28 operates on integer $e$ to obtain the pair of integers $e_1$ and $e_2$, as in step 308 of Figure 5. That is, the cryptographic unit 28 operates on integer $e$ to obtain a pair of integers $e_1$ and $e_2$, each of the integers $e_1$ and $e_2$ having a bit length less than the bit length of $e$, and the ratio of $e_1$ and $e_2$ corresponding to $e$: $e = e_1/e_2 \pmod{n}$. In an exemplary embodiment, $e_1$ and $e_2$ are derived using the truncated Extended Euclidean Algorithm, as described earlier.

Finally, in step 512, the cryptographic unit 28 operates upon integers $d_{CA}$ and $e_1$ to compute its private key $w_{CA}$ according to the formula $w_{CA} = e_1 d_{CA} + e_2 r \pmod{n}$, where $r$ is an integer parameter, possibly private to the CA 18. For example, r can be 0, 1, or $d_{CA}$. In an exemplary embodiment, $r = 0$, and therefore $w_{CA} = e_1 d_{CA} \pmod{n}$.

As will be shown in Figure 8, the public key $W_{CA}$

corresponding to private key $w_{CA}$ is computable by any party having the self-signed implicit certificate $IC_{CA}$ .

The CA 18 then sends its self-signed implicit certificate $IC_{CA}$ to correspondents 12 and 14. Upon receiving self-signed implicit certificate $IC_{CA}$ , a given correspondent, say correspondent 14, performs the following steps described below with reference to Figure 8 to obtain $W_{CA}$ .

First, in step 602, correspondent 14 operates upon $IC_{CA}$ to obtain values $B_{CA}$ and $I_{CA}$ . For example, if the self-signed implicit certificate is of the form $IC_{CA} = B_{CA} \| I_{CA}$ , the correspondent 14 simply parses $IC_{CA}$ to obtain the values $B_{CA}$ and $I_{CA}$. If the self-signed implicit certificate includes a compressed or encoded version of $B_{CA}$, the correspondent 14 operates on this compressed or encoded version of $B_{CA}$ to obtain $B_{CA}$ .

In step 604, correspondent 14 then verifies the contents of $IC_{CA}$ according to application rules. This can include verifying the contents of the certificate data $I_{CA}$, and/or the certificate's validity period. In some embodiments, correspondent 14 also verifies $B_{CA}$ is a valid key, for example, by verifying that $B_{CA}$ is a point on the underlying curve.

Next, in step 606, the cryptographic unit 26 of the correspondent 14 calculates intermediate integer value $e = Hash(IC_A)$ . In an exemplary embodiment, $Hash(IC_A)$ is truncated, if necessary, in order to yield a value

$e$ having a maximum bit length of $\left\lfloor \log_2 n \right\rfloor$ bits. The

correspondent 14 verifies that $e \neq 0$ .

Then, in step 608, the cryptographic unit 26 operates on integer $e$ to obtain the pair of integers $e_1$ and $e_2$ , as in step 510 of Figure 7.

Finally, in step 610, the cryptographic unit 26 of correspondent 14 computes the public key $W_{CA}$ of the CA 18 as $W_{CA} = e_1 B_{CA} + e_2 rG$, where $rG$ is public or publicly computable by correspondent 14. As described above, in an exemplary embodiment $r = 0$ , and therefore $W_{CA} = e_1 B_{CA}$ .

Thus, by performing steps 602 to 610, correspondent 14 obtains the public key $W_{CA}$ of the CA 18 by operating on the self-signed implicit certificate $IC_{CA}$ . As is clear from Figure 8, correspondent 14 can operate on $IC_{CA}$ itself without using another public key to compute $W_{CA}$ . Upon the completion of step 610, correspondent 14 may then use $W_{CA}$ obtained via Figure 8 to verify and/or operate upon a certificate issued by the CA 18.

In the self-signed implicit scheme described with reference to Figures 7 and 8, the use of integers $e_1$ and $e_2$ offers computational savings over directly using integer e to calculate key pair ($w_{CA}$, $W_{CA}$). This is because $e_1$ and $e_2$ each have a bit length less than the bit length of $e$ , which can be exploited to reduce the overall number of computations. In an exemplary embodiment, when $r = 0$ , only a multiplication involving $e_1$ is required. Since $e_1$ has a bit length less than $e$ , therefore the computation involving $e_1$ offers computational savings.

Advantageously, the schemes described with reference to Figures 4 to 8 involve transformations of a nature similar to the transformations applied in conventional ECQV. This is particularly convenient when implementing the above in existing ECQV-based schemes.

Although the above techniques have been described with reference to certain specific embodiments, various modifications thereof will be apparent to those skilled in the art without departing from the spirit and scope of the claims appended hereto.

For example, it will be appreciated that the self-signed implicit certificate scheme described in Figures 7 and 8 can be implemented in any trust model or topology. Generally, in any trust model or topology in which a particular CA needs to issue a root public key or a public key having an equivalent purpose, the above-described self-signed implicit certificate scheme may be used.

It will also be appreciated that the techniques described above are not limited to elliptic curve systems, but may be extended to non-elliptic curve discrete logarithmic systems (e.g. systems based on an underlying multiplicative group) using straight-forward modifications apparent to a person skilled in the art having the benefit of the present disclosure.

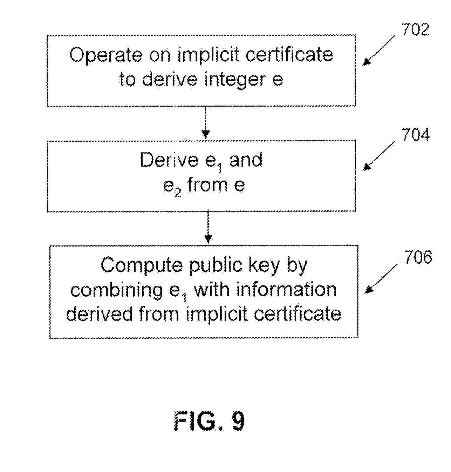

Therefore, in view of the above embodiments, Figure 9 discloses generally a method of computing a public key from an implicit certificate in a cryptographic communication system based on an underlying group. The method is performed by a computing device in the communication system and includes the following steps. In step 702, the device first operates on the implicit certificate in its cryptographic unit to derive an integer $e$. In step 704, the device then uses its cryptographic unit to derive a pair of integers ( $e_1$ , $e_2$ ) from the integer $e$, such that each of the pair of integers ( $e_1$ , $e_2$ ) has a bit length less than the bit length of the integer $e$, and such that the ratio of the pair of integers ( $e_1$ , $e_2$ ) corresponds to the integer $e$. Finally, in step 706, the device computes the public key by combining the integer $e_1$ of the pair of integers ( $e_1$ , $e_2$ ) with information derived from the implicit certificate.

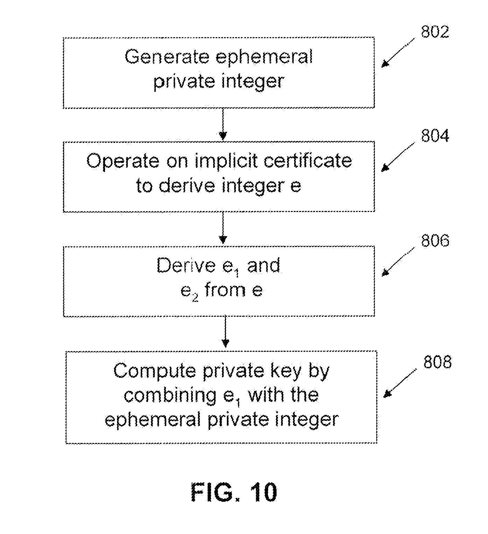

Figure 10 discloses generally a method of computing a private key in a cryptographic communication system based on an underlying group of order n . The method is performed by a computing device in the communication system and includes the following steps. In step 802, the device first generates an ephemeral private integer. Then, in step 804, the device operates on an implicit certificate in its cryptographic unit to derive an integer $e$. Next, in step 806, the device uses its cryptographic unit to derive a pair of integers ( $e_1$ , $e_2$ ) from the integer $e$, such that each of the pair of integers ( $e_1$ , $e_2$ ) has a bit length less than the bit length of the integer $e$ , and such that the ratio of the pair of integers ( $e_1$ , $e_2$ ) corresponds to the integer. Finally, in step 808, the device computes the private key by combining the integer $e_1$ of the pair of integers ( $e_1$ , $e_2$ ) with the ephemeral private integer.

## Claims

1. A method of computing a public key from an implicit certificate associated with a certificate authority in a cryptographic communication system based on an underlying group of order n ; the method being performed by a computing device in the communication system; the device comprising a cryptographic unit; the method comprising:

   the device operating on the implicit certificate in the cryptographic unit to derive an integer $e$ ;
   the device deriving a pair of integers $e_1$ and $e_2$ from the integer e in said cryptographic unit, each of the integers $e_1$ and $e_2$ having a bit length less than the bit length of the integer $e$, and the ratio of the pair of integers $e_1$ and $e_2$ corresponding to the integer $e$ ; and
   the device computing the public key by combining the integers $e_1$ and $e_2$ with public key contribution data derived from said implicit certificate and a static public key of the certificate authority.

2. The method of claim 1 wherein said operating on the implicit certificate in the cryptographic unit to derive said integer $e$ comprises: computing a hash H of the implicit certificate and operating on said hash H to derive said integer $e$.

3. The method of claim 2 wherein said group is an elliptic curve group, the method further comprising:

   the device verifying contents of the implicit certificate; and
   upon verification, the device operating on the implicit certificate to derive a point on the elliptic curve representing the public key contribution data;

   and wherein the computing of the public key comprises combining the integer $e_1$ with the public key contribution data and combining the integer $e_2$ with the static public key of the certificate authority.

4. The method of claim 3 wherein the public key is of the form $e_1 B_A + e_2 W_{CA}$ ; wherein $B_A$ is the public key contribution data and $W_{CA}$ is the static public key of the certificate authority that issued the implicit certificate.

5. The method of claim 4 wherein the public key is computed using simultaneous multiple point multiplication.

6. The method of claim 3 wherein the implicit certificate is a self-signed implicit certificate, and wherein the public key is of the form $e_1 B_{CA}$, wherein $B_{CA}$ is the ephemeral public key of the certificate authority.

7. A method of computing a private key from an implicit certificate associated with a certificate authority in a cryptographic communication system based on an underlying group of order n ; the method being performed by a computing device in the communication system; the device comprising a cryptographic unit; the method comprising:

   the device generating an ephemeral private key;
   the device operating on the implicit certificate in the cryptographic unit to derive an integer $e$;
   the device deriving a pair of integers $e_1$ and $e_2$ from the integer e in the cryptographic unit, each of the integers $e_1$ and $e_2$ having a bit length less than the bit length of the integer $e$, and the ratio of the integers $e_1$ and $e_2$ corresponding to the integer $e$ ; and
   the device computing the private key by combining the integers $e_1$ and $e_2$ with the ephemeral private key and private key contribution data of the certificate authority.

8. The method of claim 7 wherein the operating on the implicit certificate in the cryptographic unit to derive the integer $e$ comprises: computing a hash H of the implicit certificate and operating on the hash H to derive the integer $e$.

9. The method of claim 8 wherein the group is an elliptic curve group, the method further comprising:

   the device verifying contents of the implicit certificate; and
   upon verification, the device combining the integer $e_1$ with the ephemeral private key and combining the integer $e_2$ with the private key contribution data.

10. The method of claim 9 wherein the private key is of the form $e_1 d_A + e_2 s$ (mod $n$) ; wherein $d_A$ is the ephemeral private key and s is private key contribution data received from the certificate authority.

11. The method of claim 8 wherein the group is an elliptic curve group, the implicit certificate is a self-signed implicit certificate, and the computing device is the certificate authority.

12. The method of claim 11 wherein the private key is of the form $e_1 d_{CA}$ (mod $n$), wherein $d_{CA}$ is the ephemeral private key of the certificate authority.

13. The method of any one of the preceding claims wherein the integers $e_1$ and $e_2$ are derived using a truncated Extended Euclidean Algorithm.

**14.** A device configured to perform the operations of any one of claims 1 to 6 and 13 or any one of claims 7 to 13.

**15.** A certificate authority configured to perform the operations of any one of claims 7 to 13.

**16.** A computer readable medium comprising computer readable instructions which when implemented on a device cause the device to perform the steps of any one of claims 1 to 6 and 13 or any one of claims 7 to 13.

FIG. 1

FIG. 2

**FIG. 3**

202 → Correspondent 12 generates ephemeral key pair $(d_A, Q_A)$

204 → Correspondent 12 sends $Q_A$ to CA 18

206 → CA 18 verifies authenticity of request and of $Q_A$

208 → CA 18 generates ephemeral key pair $(d_{CA}, Q_{CA})$

210 → CA 18 computes $B_A = Q_A + Q_{CA}$

212 → CA 18 constructs certificate data $I_A$

214 → CA 18 operates on $B_A$ and $I_A$ to obtain $IC_A$

216 → CA 18 computes $e = Hash(IC_A)$

218 → CA 18 computes $s = ed_{CA} + w_{CA} \pmod{n}$

220 → CA sends s and $IC_A$ to correspondent 12

**FIG. 4**

```
┌─────────────────────────────┐
│  Correspondent 12 operates  │ ← 302
│  on ICₐ to obtain Iₐ and Bₐ │
└─────────────────────────────┘
              │
              ▼
┌─────────────────────────────┐
│  Correspondent 12 verifies  │ ← 304
│      contents of ICₐ        │
└─────────────────────────────┘
              │
              ▼
┌─────────────────────────────┐
│  Correspondent 12 computes  │ ← 306
│       e=Hash(ICₐ)           │
└─────────────────────────────┘
              │
              ▼
┌─────────────────────────────┐
│   Correspondent 12 obtains  │ ← 308
│      e₁ and e₂ from e       │
└─────────────────────────────┘
              │
              ▼
┌─────────────────────────────┐
│  Correspondent 12 computes  │ ← 310
│      its private key        │
│   wₐ=e₁dₐ+e₂s (mod n)       │
└─────────────────────────────┘
```

**FIG. 5**

```
┌─────────────────────────────┐
│   Correspondent 14 operates │ ⟵ 402
│   on IC_A to obtain I_A and B_A │
└─────────────────────────────┘
              │
              ▼
┌─────────────────────────────┐
│   Correspondent 14 verifies │ ⟵ 404
│       contents of IC_A      │
└─────────────────────────────┘
              │
              ▼
┌─────────────────────────────┐
│   Correspondent 14 computes │ ⟵ 406
│        e=Hash(IC_A)         │
└─────────────────────────────┘
              │
              ▼
┌─────────────────────────────┐
│    Correspondent 14 obtains │ ⟵ 408
│       e_1 and e_2 from e     │
└─────────────────────────────┘
              │
              ▼
┌─────────────────────────────┐
│   Correspondent 14 computes │ ⟵ 410
│ public key of correspondent 12 │
│     W_A=e_1B_A+e_2W_CA       │
└─────────────────────────────┘
```

**FIG. 6**

FIG. 7

FIG. 8

- 602 — Correspondent 14 operates on $IC_{CA}$ to obtain $I_{CA}$ and $B_{CA}$
- 604 — Correspondent 14 verifies contents of $IC_{CA}$
- 606 — Correspondent 14 computes $e = Hash(IC_{CA})$
- 608 — Correspondent 14 obtains $e_1$ and $e_2$ from $e$
- 610 — Correspondent 14 computes public key of CA 18 $W_{CA} = e_1 B_{CA} + e_2 rG$

EP 2 495 907 A1

```
                                                              ╱ 702
┌─────────────────────────────────────┐ ╱
│   Operate on implicit certificate   │ ◄
│        to derive integer e          │
└─────────────────────────────────────┘
                    │
                    ▼
                                                              ╱ 704
┌─────────────────────────────────────┐ ╱
│           Derive e₁ and             │ ◄
│            e₂ from e                │
└─────────────────────────────────────┘
                    │
                    ▼
                                                              ╱ 706
┌─────────────────────────────────────┐ ╱
│        Compute public key by        │ ◄
│   combining e₁ with information      │
│  derived from implicit certificate  │
└─────────────────────────────────────┘
```

**FIG. 9**

Generate ephemeral private integer — 802

Operate on implicit certificate to derive integer e — 804

Derive $e_1$ and $e_2$ from e — 806

Compute private key by combining $e_1$ with the ephemeral private integer — 808

FIG. 10

Europäisches
Patentamt

European
Patent Office

Office européen
des brevets

# EUROPEAN SEARCH REPORT

Application Number

EP 11 15 6333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | STRUIK ET AL: "SEC 4: Elliptic Curve Qu-Vanstone Implicit Certificate Scheme (ECQV), v0.91", INTERNET CITATION, 18 November 2008 (2008-11-18), page 22PP, XP007914511, Retrieved from the Internet: URL:http://www.secg.org/download/aid-775/sec4-ECQV-v091.pdf [retrieved on 2010-08-18] * pages 9-11 * | 1-16 | INV. H04L9/30 |
| Y | US 2007/064932 A1 (STRUIK MARINUS [CA] ET AL) 22 March 2007 (2007-03-22) * columns 2,3,8 * | 1-16 | |
| T | EP 1 056 053 A2 (CERTICOM CORP [CA]) 29 November 2000 (2000-11-29) * pages 326-328 * | | |
| A | WO 2008/058377 A1 (CERTICOM CORP [CA]; VANSTONE SCOTT A [CA]) 22 May 2008 (2008-05-22) * the whole document * | 1-16 | TECHNICAL FIELDS SEARCHED (IPC)<br><br>H04L |
| A | PARK Y-H ET AL: "AN ALTERNATE DECOMPOSITION OF AN INTEGER FOR FASTER POINT MULTIPLICATION ON CERTAIN ELLIPTIC CURVES", PUBLIC KEY CRYPTOGRAPHY. INTERNATIONAL WORKSHOP ON PRACTICE ANDTHEORY IN PUBLIC KEY CRYPTOGRAPHY, XX, XX, 1 January 2002 (2002-01-01), pages 323-334, XP001068196, * the whole document * | 1-16 | |

The present search report has been drawn up for all claims

| Place of search | Date of completion of the search | Examiner |
|---|---|---|
| Munich | 5 August 2011 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 11 15 6333

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2011

| Patent document cited in search report | | Publication date | Patent family member(s) | | Publication date |
|---|---|---|---|---|---|
| US 2007064932 | A1 | 22-03-2007 | NONE | | |
| EP 1056053 | A2 | 29-11-2000 | AU | 3401600 A | 30-11-2000 |
| | | | CA | 2285770 A1 | 26-11-2000 |
| | | | CA | 2308084 A1 | 26-11-2000 |
| WO 2008058377 | A1 | 22-05-2008 | CA | 2669472 A1 | 22-05-2008 |
| | | | CN | 101647229 A | 10-02-2010 |
| | | | EP | 2082523 A1 | 29-07-2009 |
| | | | JP | 2010509623 A | 25-03-2010 |
| | | | US | 2010023775 A1 | 28-01-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HANKERSON et al.** Guide to Elliptic Curve Cryptography. Springer-Verlag, 2004